# EUROPEAN PATENT SPECIFICATION

(11) **EP 2 644 286 B1**
(45) Date of publication and mention of the grant of the patent: **17.08.2016**
(21) Application number: 12854831.0
(22) Date of filing: 17.12.2012
(51) Int. Cl.: B09B 1/00, B09B 5/00

(54) **METHOD FOR MANUFACTURING COMPACTED MOLDED BODY**
VERFAHREN ZUR HERSTELLUNG EINES VERDICHTETEN FORMKÖRPERS
PROCÉDÉ DE FABRICATION D'UN CORPS MOULÉ COMPACTÉ

(30) Priority: 09.11.2012 JP 2012247886
(43) Date of publication of application: 02.10.2013
(73) Proprietor: Fuji Corporation Co., Ltd., Saku-shi, Nagano 385-0009 (JP)
(72) Inventor: YAMAGUCHI, Tokichiro, Saku-shi Nagano 385-0009 (JP)
(74) Representative: Hofmann, Ralf U.
(86) International application number: PCT/JP2012/082691
(87) International publication number: WO 2013/085077

(56) References cited:
- JP-A- 2001 184 427
- JP-A- 2002 109 154
- JP-A- 2006 053 726
- JP-A- 2008 173 570
- JP-A- 2010 023 020
- JP-A- 2010 207 669
- JP-A- 2010 207 669
- JP-A- 2010 240 501
- JP-A- 2010 240 501

## Description

### Technical Field

The present invention relates to method for manufacturing and managing a compressed solidification by use of a compressed solidification manufacturing management system which manufactures and manages a compressed solidification obtained by filling a banking material containing an inorganic waste in a final disposal site.

### Background Art

Conventionally, as a fill management system of waste at a final disposal site of this type, there are known ones in which coordinates are allocated two-dimensionally to a final disposal site preliminarily, a waste is dumped in the two-dimensional coordinate position by a hopper crane, and waste information is coordinated to the coordinate position and is memorized.

### Prior Art Literature

### Patent Literature

Patent Literature 1: Japanese Patent No. 3786870
JP 2010-207669 A discloses a method of molding and disposing of many solidified units by inorganic waste separation or integration in final disposal site and many solidified units-molding and disposal structure. JP 2010-240501 A discloses a cover structure for buried waste in final waste-disposal site.

### Disclosure of the Invention

### Problem to be Solved by the Invention

However, in such fill management system of the waste at the final disposal site, the coordinate position is a virtual one, and there is no demarcation in the actual final disposal site. Therefore, at an adjacent region of the coordinate position, it was not clear as to which coordinate position the waste was intended to be dumped.

Further, as it is apparent from the fact that the hopper crane repeatedly performs dumping of the waste to identical coordinate position, various wastes are piled up in a vertical direction, and it was also not clear at the adjacent region as to which dumping frequency the waste was intended to be dumped.

In view of the above-mentioned circumstances, the present invention aims at providing a compressed solidification manufacturing management system, which is capable of manufacturing a compressed solidification which is obtained by filling a banking material containing an inorganic waste so as to be capable of specifying the same afterwards, capable of tracking and managing all history of the manufactured compressed solidification, and consequently improving reliability with respect to an emitter.

### Means for Solving the Problem

A method for manufacturing and managing a compressed solidification by means of a compressed solidification manufacturing management system according to a first aspect of the invention is a compressed solidification manufacturing management system which manufactures and manages a compressed solidification obtained by filling in banking material containing inorganic waste at a final disposal site, characterized by comprising:
a raw material specifying means which specifies a type, weight and consigner of the inorganic waste introduced into the final disposal site;
a banking material manufacturing means which manufactures, according to the type of the inorganic waste specified by the raw material specifying means, a type-A banking material prepared by kneading a cement and water with a type-A inorganic waste in which a hazardous material concentration is equal to or less than a predetermined reference value, or a type-B banking material prepared by kneading the cement and water with a type-B inorganic waste in which the hazardous material concentration exceeds the predetermined reference value;
a compressing-solidifying means which forms the compressed solidification, after demarcating by walls an actual fill demarcated space corresponding to a coordinate space preliminarily partitioned three-dimensionally with respect to fill space of the final disposal site, and providing a first space and a second space by partitioning the fill demarcated space in a horizontal direction, by forming a first compressed solidification forming a second compressed solidification part by pouring and compressing the type-A banking material on top of the first compressed solidification part, and forming a third compressed solidification part by removing the partition between the first space and the second space in a state where the first compressed solidification part and the second compressed solidification part are formed, and pouring and compressing the type-A banking material in the second space; and
a memory managing means which memorizes and manages, as information of the type-A banking material and the type-B banking material compressed and solidified in the fill demarcated space by the compressing-solidifying means, the type, the weight and the consigner of the inorganic waste specified by the raw material specifying means, a manufacturing date and a weight of the type-A banking material or the type-B banking material manufactured by the banking material manufacturing means, and a used date on which the type-A banking material or the type-B banking material is used by the compressing-solidifying means, that are coordinated to each coordinate space;
wherein the memory managing means issues a treatment certification displaying the coordinate space to the consigner, after completion of the formation of the compressed solidification in the fill demarcated space by the compressing-solidifying means.

According to the compressed solidification manufacturing management system of the first aspect of the invention, as an intermediate treatment of the inorganic waste, the type-A banking material or the type-B baking material as a recycle material may be manufactured from the inorganic waste. Further, by preparing the inorganic waste as the type-A banking material or the type-B banking material, it becomes possible to compress and solidify the same in the fill demarcation demarcated by walls, so as to form one compressed solidification (concrete solidified product), and to clearly distinguish the compressed solidification of the adjacent fill demarcated space.

By corresponding the actual fill demarcated space with the coordinate space preliminarily partitioned three-dimensionally with respect to the fill space of the final disposal site, it becomes possible to manufacture and manage each one of the compressed solidification so as to be capable of specifying the same afterwards on the three-dimensional coordinate space.

Further, by coordinating, to the three-dimensional coordinate space, the type, the weight, and the consigner of the inorganic waste specified by the raw material specifying means, the manufacturing date and the weight of the type-A banking material or the type-B banking material manufactured by the banking material manufacturing means, and the used date when the type-A banking material or the type-B banking material is used by the compressing-solidifying means, it becomes possible to manage each one of the compressed solidification, and also to certify treatment with respect to the consigner (for example, an emitter of the inorganic waste).

At this time, by issuing the treatment certification displaying the coordinate space to the consigner, after completion of the formation of the compressed solidification at the fill demarcated space by the compressing-solidifying means, it becomes possible to certify that it is in the sate where all history of the manufactured compressed solidification may be tracked and managed.

As such, according to the compressed solidification manufacturing management system of the first aspect of the invention, it becomes possible to manufacture the compressed solidification obtained by filling the banking material including the inorganic waste so as to be capable of specifying the same afterwards, so that it becomes possible to track and manage every record of the manufactured compressed solidification, and consequently improve reliability with respect to the emitter.

Herein, hazardous substances includes hazardous substances (dioxins) and heavy metals found in the incinerated ash of typical waste such as kitchen waste and disposable plastic, as well as radioactive substances, and are differentiated into type-A inorganic waste and type-B inorganic waste according to whether or not a reference value for any one concentration (such as an amount of radioactivity equal to 100 Bq/kg for radioactive substances, for example) is exceeded.

The compressed solidification manufacturing management system of a second aspect of the invention is, in the first aspect of the invention,
the raw material specifying means specifies the type, the weight, and the consigner of the inorganic waste introduced into the final disposal site, and issues an issue number accompanying the introduction, and
the memory managing means memorizes and manages, as information of the type-A banking material and the type-B banking material compressed and solidified in the fill demarcation space by the compressing-solidifying means, the issue number issued by the raw material specifying means, that is coordinated to each coordinate space, and display the issue number together with the coordinate space in the treatment certification.

According to the compressed solidification manufacturing management system of the second aspect of the invention, by issuing the issue number (so-called manifest number) when the inorganic waste is introduceed into the final disposal site, and by coordinating the issue number and the three-dimensional coordinate space by the raw material specifying means, it becomes possible to specify afterwards the compressed solidification which is compressed and solidified using the inorganic waste as the banking material from the issue number.

Further, by displaying the issue number in addition to the coordinate space in the treatment certification, it becomes possible to certify that all history of the manufactured compressed solidification is in the state of being coordinated and traced with the issue number.

As is explained above, according to the compressed solidification manufacturing management system of the second aspect of the invention, it becomes possible to further improve the reliability with respect to the emitter, by manufacturing the compressed solidification to be able to specify the same afterwards by coordinating with the issue number, and also by being able to trace and manage all history of the manufactured compressed solidification from the issue number.

### Brief Description of Drawings

FIG. 1 is an overall configuration diagram illustrating a compressed solidification manufacturing management system of the present embodiment;
FIG. 2 is an explanatory diagram illustrating a coordinate space demarcating three-dimensionally a fill space of a final disposal site;
FIG. 3 is an explanatory diagram illustrating an actual fill demarcated space coordinated to the coordinate space;
FIG. 4 is an explanatory diagram illustrating manufacturing process of the compressed solidification by a compressing-solidifying means;
FIG. 5 is an explanatory diagram illustrating a managing state of the compressed solidification by the coordinate space; and
FIG. 6 is an explanatory diagram illustrating a managing state of the compressed solidification by a treatment certification.

### Mode for Carrying Out the Invention

A compressed solidification manufacturing management system will now be described as an exemplary embodiment of the present invention.

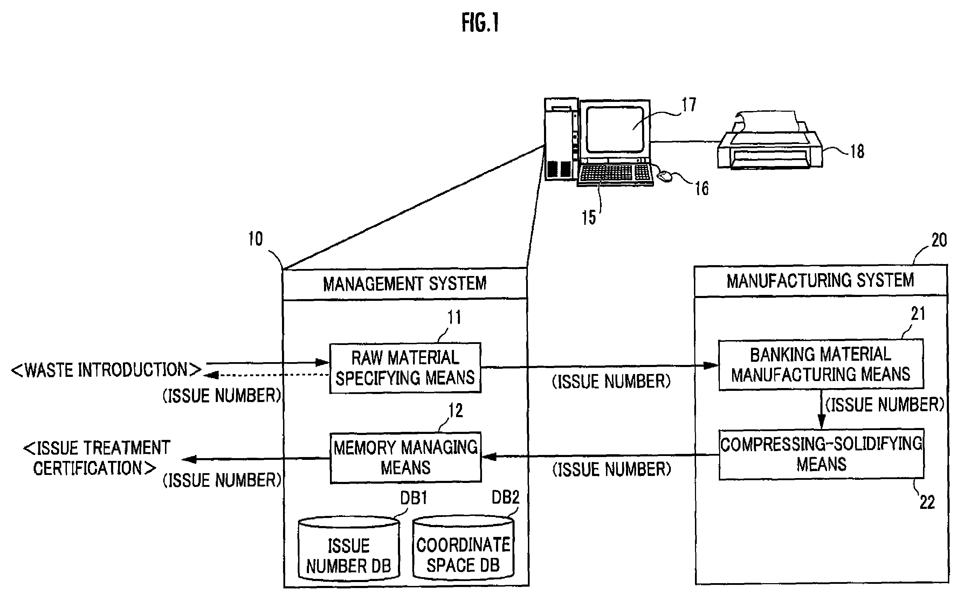

As is shown in FIG. 1, the compressed solidification manufacturing management system is equipped with a management system 10 and a manufacturing system 20.

The management system 10 is equipped with a raw material specifying means 11, a memory managing means 12, an issue number database DB 1, and a space coordinate database DB2, and the manufacturing system 20 is equipped with a baking material manufacturing means 21 and a compressing-solidifying means 22.

In the present embodiment, each processing means 11, 12, DB1, and DB2 are configured by a hardware such as a CPU, a ROM, a RAM and the like, and these processing means may be configured from a common hardware, or a part of or all of these processing means may be configured from different hardware.

Further, the management system 10 is connected with a keyboard 15 and a mouse 16 as an operating means, and is equipped with a display 17 as a displaying means and a printer 18 as an outputting means.

The raw material specifying means 11 specifies an introduction date a raw material is introduced to a final disposal site, and classification, weight and consigner of an inorganic waste. Specifically, the raw material specifying means 11 specifies the consigner (an emitter) and the classification of the inorganic waste, from a consigner certificate upon introducing an incineration ash, a melt-solidification product (a melt-slug) incinerated by an incinerating facility of a municipality, and the weight of the inorganic waste is specified by weighing at the time of introducing.

Further, the raw material specifying means 11 issues an issue number accompanying the introduction, and stores the issue number (a manifest number) coordinated with the specified introduction date the raw material is introduced to the final disposal site, the classification, the weight, and the consigner of the inorganic waste, to the issue number database DB1. The issue number is a random number without duplicate generated by a random number generator.

Explanation of the memory managing means 12, the issue number database DB1, and a space coordinate database DB2 will be postponed.

The baking material manufacturing means 21 manufactures a banking material from the inorganic waste managed by the issue number. Specifically, a mixing apparatus (not illustrated) prepares the type-A banking material by mixing type-A inorganic waste, in which concentration of hazardous substances is equal to or less than a predetermined reference value, with added cement and water, and also prepares the type-B banking material by mixing type-B inorganic waste, in which concentration of hazardous substances exceeds the predetermined reference value, with added cement and water. The manufactured type-A banking material and type-B banking material are specified and managed by the issued number.

In the present embodiment, the type-A inorganic waste may be waste with various concentrations of hazardous substances which are each equal to or less than a given reference value, but may also be waste with a concentration of hazardous substances that is simply less than that of the B-type inorganic waste (irrespective of a reference value).

The compressing-solidifying means 22 manufactures a compressed solidification using the type-A banking material and the type-B baking material (both managed by the issue number) manufactured by the baking material manufacturing means 21. Specifically, a fill demarcated space is formed by demarcating by walls, and the type-A banking material is set and compressed so as to surround the type-B banking material in the fill demarcated space.

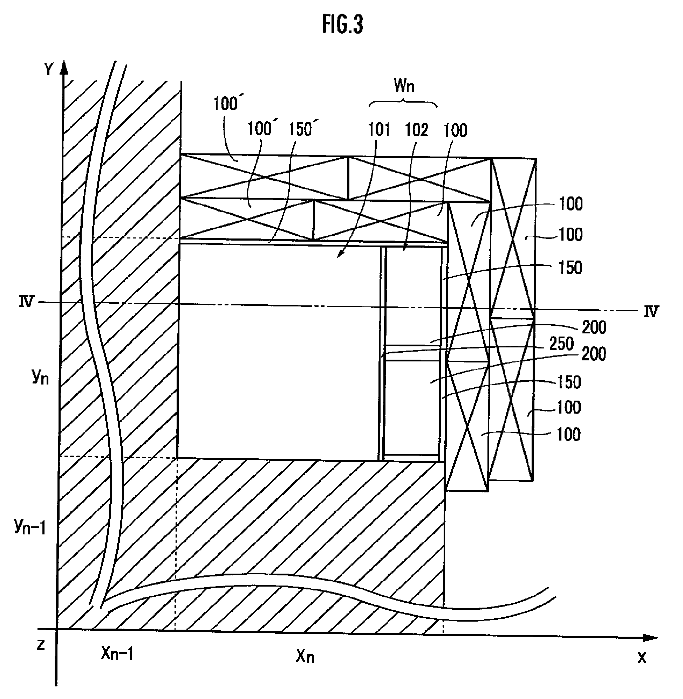

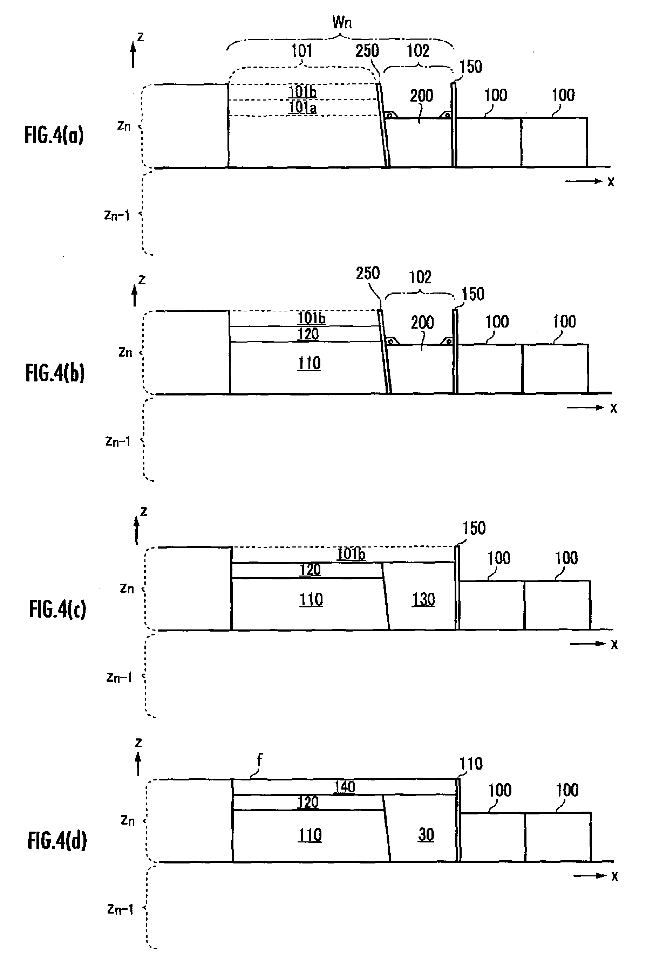

The manufacturing of the compressed solidification by the compressing-solidifying means 22 will be explained later with reference to FIG. 3 and FIG. 4.

Next, the postponed explanation of the memory managing means 12, the issue number database DB1, and the space coordinate database DB2 will be explained.

The memory managing means 12 makes the issue number database DB1 memorize various information coordinated with the issue number issued by the raw material specifying means 11, and manages (inputs/outputs) the information.

Further, the memory managing means 12 makes the space coordinate database DB2 memorize information on the type-A banking material and the type-B banking material compressed and solidified to the fill demarcation by a compressing-solidifying means 22 for each coordinate space, and manages (inputs/outputs) the information.

The issue number database DB1 is a memory means which memorizes and manages the issue number issued by the raw material specifying means 11, and memorizes, in coordination with one issue number, the introduction date a raw material is introduced to the final disposal site, and classification, weight and consigner of the inorganic waste. Further, the manufacturing date of the type-A banking material and the type-B banking material managed uniformly with the identical issue number, the used date when the type-A banking material or the type-B banking material is used, and the space coordinate corresponding to the fill demarcation of the compressed solidification manufactured by such use, are memorized coordinated with the issue number.

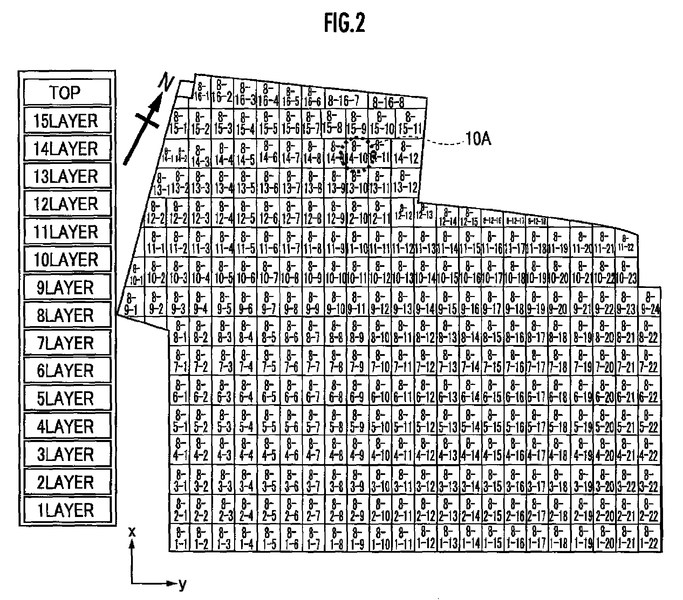

As is shown in FIG. 2, the space coordinate database DB2 memorizes and manages, for the coordinate space preliminarily demarcated three-dimensionally with respect to the fill space of the final disposal site, information concerning the actual fill demarcated space corresponding to each coordinate space, for each coordinate space.

FIG. 2 shows a look of a plain demarcation (X-Y coordinate space) for an eighth layer of the fill space of the final disposal site with fifteen-layer structure in a vertical direction (Z direction). In FIG. 2, shaded portion indicates the fill demarcated space in which the formation of the compressed solidification has been completed, and a blank portion indicates the fill demarcated space in which the formation of the compressed solidification will be performed hereafter.

Specifically, the space coordinate database DB2 memorizes and manages, for each coordinate space, as information of the type-A banking material and the type-B banking material compressed and solidified in the actual fill demarcated space corresponding to each coordinate space, the introduction date the raw material is introduced to the final disposal site, and classification, weight and consigner of the inorganic waste specified by the raw material specifying means 11, the issue number issued by the raw material specifying means 11, the manufacturing date and weight of the type-A banking material and the type-B banking material manufactured by the banking material manufacturing means 21 and coordinated by the issue number, and the used date when the type-A banking material or the type-B banking material is used by the compressing-solidifying means 22 and coordinated by the issue number.

Next, the postponed explanation of the manufacturing of the compressed solidification by the compressing-solidifying means 22 will be explained with reference to FIG. 3 and FIG. 4.

As is shown in FIG. 3, in the final disposal site, the demarcation in which the banking material containing the inorganic waste is filled, is the actual fill demarcated space corresponded to the coordinate space managed by the space coordinate database DB2, and can be defined as a fill direction X and a fill direction Y orthogonal to the fill direction X in the same plane, and once filling in the same plane is finished, can be expanded by defining a next plane in the height direction Z.

In the present embodiment, the case of shielding compressed solidifications obtained by filling in banking material containing inorganic waste in divisions (Xn, Yn) on a level Zn will be described hereinafter.

As illustrated in FIG. 3, first, the compressing-solidifying means 22 divides the divisions (Xn, Yn) on a level Zn by walls to form a fill space Wn, and the fill space Wn is demarcated in the horizontal direction to form a first space 101 and a second space 102 (preprocessing step).

Specifically, in such a preprocessing step, the fill space Wn is first formed by the walls of already-filled adjacent divisions (Xn, Yn-1) and (Xn-1, Yn), and walls formed by standing up a metal plate 150 onto temporary dams 100, as illustrated in FIG. 3.

Note that the temporary dams 100 and the metal plate 150 are disposed for the fill direction X, while the temporary dams 100' and the metal plate 150' are disposed for the orthogonal direction Y.

Next, compressing-solidifying means 22 disposes an internal partitioning temporary dams 200 in the fill direction X of the fill space Wn and stands up a partitioning metal plate 250 thereon, thereby making the fill space Wn to the second space 102 where the internal partitioning temporary dams 200 are disposed, and the remaining first space 101.

FIG. 4(A) illustrates how the fill space Wn is partitioned into the first space 101 and the second space 102 by the partitioning metal plate 250 in this way.

Note that the internal partitioning temporary dams 200 have a tapered face in which the face adjoining the partitioning metal plate 250 becomes narrower proceeding from top to bottom.

Next, the compressing-solidifying means 22 forms a first compressed solidification part 110 by pouring and compressing the type-B banking material manufactured by the banking material manufacturing element into a first space 101 (first step).

In such a first step, the first compressed solidification part 110 is formed by pouring the type-B banking material, and setting and compressing the poured type-B banking material, while leaving constant upper spaces 101a and 101b at the top of the first space 101.

Next, the compressing-solidifying means 22 forms a second compressed solidification part 120 by pouring and compressing the type-A banking material into an upper space 101a over the first compressed solidification part 110 (second step).

In such a second step, the second compressed solidification part 120 is formed by pouring the type-A banking material manufactured by the banking material manufacturing means 21 into the upper space 101a over the first compressed solidification part 110 (leaving the upper space 101b), and then setting and compressing the poured type-A banking material.

Note that in the second step, it is preferable to not have the type-B banking material and the type-A banking material come into direct contact, by evenly spreading and setting fresh gravel over the first compressed solidification part 110 before pouring the type-A banking material. This also exhibits a shielding effect due to the gravel in the case where the type-B banking material contains radioactive substances.

FIG. 4(B) illustrates how the first compressed solidification part 110 and the second compressed solidification part 120 are formed in the first space 101 in this way.

Next, the compressing-solidifying means 22 removes the partition between the first space 101 and the second space 102 is removed, and a third compressed solidification part 130 is formed by pouring and compressing the type-A banking material manufactured by the banking material manufacturing means 21 into the second space 102 (third step).

In such a third step, first the internal partitioning temporary dams 200 are hoisted and eliminated, and next the partitioning metal plate 250 is removed. At this point, since the internal partitioning temporary dams 200 have a tapered face in which the face adjoining the partitioning metal plate 250 becomes narrower proceeding from top to bottom, the high pressure applied to this face during the compression of the first compressed solidification part 110 and the second compressed solidification part 120 acts to push the internal partitioning temporary dams 200 upwards. For this reason, the internal partitioning temporary dams 200 may be easily hoisted up and removed.

Subsequently, the compressing-solidifying means 22 forms the third compressed solidification part 130 by pouring the type-A banking material, and then setting and compressing the poured type-A banking material, while leaving the constant upper space 101b at the top of the second space 102. At this point, the type-A banking material is poured and set such that the surface of the third compressed solidification part 130 becomes continuous with the second compressed solidification part 120.

FIG. 4(C) illustrates how the third compressed solidification part 130 is formed in the second space 102 in this way.

Note that a structure in which the first compressed solidification part 110, the second compressed solidification part 120, and the third compressed solidification part 130 are integrated is equivalent to a compressed solidification of the present invention.

Further, preferably, the compressing-solidifying means 22 shields the top surface of the second compressed solidification part 120 and the third compressed solidification part 130 (fourth step).

In such a fourth step, an upper primary shield layer is formed by evenly spreading and compressing fresh gravel over the second compressed solidification part 120 and the third compressed solidification part 130 (in the upper space 101b). Subsequently, an upper capping layer is formed by evenly spreading a covering material consisting of a cement mixture (mortar, for example), and then evenly spreading and compressing gravel onto the evenly spread covering material. Additionally, an upper secondary shield layer is formed by evenly spreading the gravel over the upper capping layer.

In this state, the upper primary shield layer, the upper capping layer, and the upper secondary shield layer are integrated by spreading a cover metal plate (not illustrated) so as to cover the entire top surface, placing a weight (not illustrated) on the cover metal plate, and allowing a curing period to elapse. At this point, the surface f becomes continuous with the adjacent divisions. Then, after the curing period elapses, the cover metal plate and the weight are removed.

Then partially enlarged view in FIG. 4(D) illustrates the upper shield structure 140 obtained as a result.

By forming the upper shield structure 140 on the top face of the compressed solidifications, contact between inorganic waste and rainwater is completely avoided at the top face of the compressed solidifications.

Further, preferably, the compressing-solidifying means 22 shields a lateral face of the third compressed solidification part 130 that is exposed by removing a lateral wall in the fill direction X (fifth step).

In such a fifth step, first the temporary dams 100 in the fill direction X side are hoisted and eliminated, and next the metal plate 150 is removed. Subsequently, a lateral primary shield layer is formed by applying a coating (a highly waterproof building exterior coating, such as an epoxy resin undercoating, for example) to the exposed lateral face of the third compressed solidification part 130. In addition, a lateral capping layer is formed by applying a thick coating (a highly waterproof building exterior coating, such as a thick plastic emulsion finishing coat material, for example) to the lateral primary shield layer. Additionally, a lateral secondary shield layer (not illustrated) is formed by applying a coating (a highly waterproof building exterior coating, such as an epoxy resin finish coating, for example) to the lateral capping layer.

Note that in the case where depressions exist in the exposed lateral face of the third compressed solidification part 130, it is preferable to form the lateral primary shield layer, the lateral capping layer, and the lateral secondary shield layer after first grouting the depressions with covering material in advance.

In the compressed solidification formed as explained above, one compressed solidification (a concrete solidified product) is formed by demarcating the actual fill demarcated space corresponding to the coordinate space by walls, and compressing and solidifying the type-A banking material or the type-B banking material in the demarcation, it becomes possible to clearly distinguish the compressed solidification of the adjacent fill demarcated space, and it becomes possible to manufacture the compressed solidification so as to be capable of specifying the same afterwards, both physically and in corresponding relationship with the demarcated space.

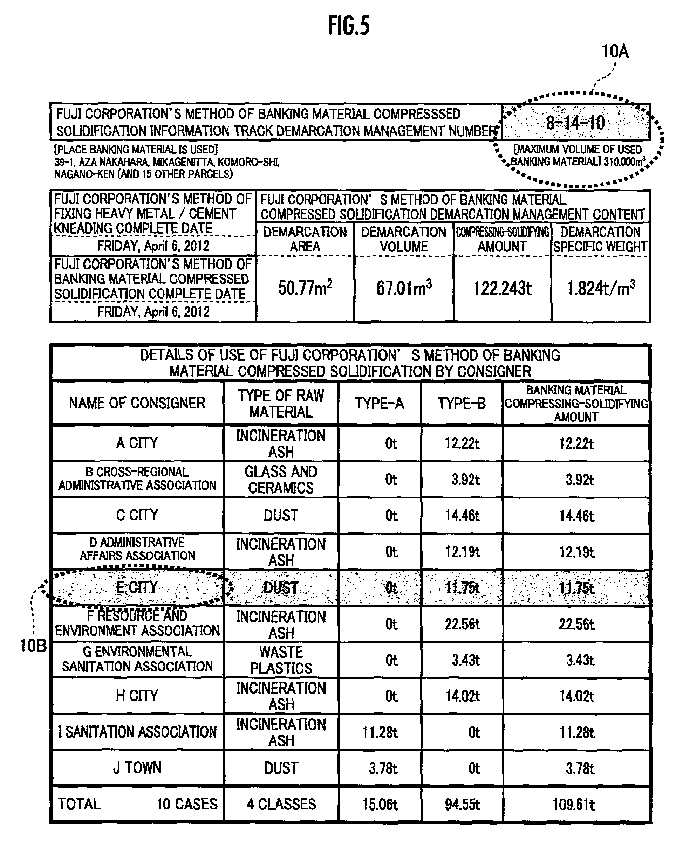

The above is the configuration of the compressed solidification manufacturing management system of the present embodiment. In the memory managing means 12 of the compressed solidification manufacturing management system, for the coordinate space memorized and managed by the space coordinate database DB2, for example when a coordinate space 8-14-10 of an eighth layer ((Xn, Yn, Zn) = (14, 10, 8)) as a coordinate space number 10A indicated by a broken line in Fig. 2, is selected by the keyboard 15 and the mouse 16, information related to the actual fill demarcated space corresponding to the coordinate space 8-14-10 is displayed on the display 17, as is shown in Fig. 5.

Fig. 5 shows information of the compressed solidification compressed and solidified in the actual fill demarcated space corresponding to the coordinate space 8-14-10. First, the coordinate space number 10A is indicated on upper right, and as basic information of the coordinate space 8-14-10, a demarcation area, a demarcation volume and the like are displayed therebelow.

Further, as information of the type-A banking material and the type-B banking material compressed and solidified in the coordinate space 8-14-10, all of the type-A banking material and the type-B banking material used by the compressing-solidifying means 22 is displayed.

At this time, the space coordinate database DB2 memorizes and manages, for each coordinate space, (1) the introduction date the raw material is introduced to the final disposal site, and classification, weight and consigner of the inorganic waste, that are specified by the raw material specifying means 11, (2) the manufacturing date and the weight of the type-A banking material and the type-B banking material that are manufactured by the baking material manufacturing means 21, and (3) the used date when the type-A banking material or the type-B banking material is used by the compressing-solidifying means 22, coordinated with the issue number.

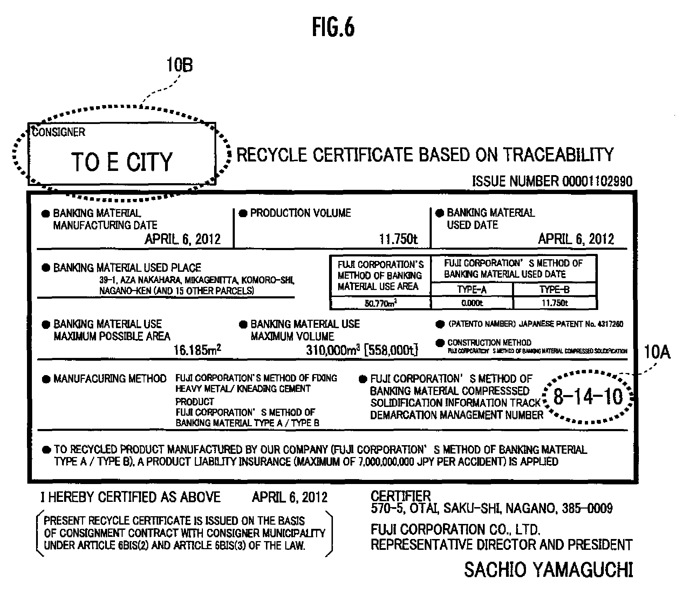

Therefore, it becomes possible to certify treatment, via the memory managing means 12. That is, when a given consigner 10B is selected in the display screen in Fig. 5, information of the issue number corresponding thereto is displayed in the display 17 as a recycle certificate (treatment certification), as is shown in Fig. 6. Thereafter, such recycle certificate (treatment certification) may be printed out and output by the printer 18.

The recycle treatment certificate (treatment certification) is not output before completing formation of the compressed solidification in the fill demarcated space by the compressing-solidifying means 22, since coordination to the coordinate space is not performed, until the used date of the type-A banking material or the type-B banking material by the compressing-solidifying means 22 is input.

That is, it becomes possible to issue the recycle treatment certificate (treatment certification) to the consigner, after completion of the forming of the compressed solidification in the fill demarcated space by the compressing-solidifying means 22. By doing so, it becomes possible to establish that it is in the state of being able to track and manage every record of the manufactured compressed solidification.

As explained above, according to the compressed solidification manufacturing management system of the present embodiment, it becomes possible to manufacture the compressed solidification obtained by filling the banking material including the inorganic waste so as to be capable of specifying the same afterwards, so that it becomes possible to track and manage every record of the manufactured compressed solidification, and consequently improve reliability with respect to the emitter.

In the compressed solidification manufacturing management system of the present embodiment, explanation has been given on the case where the issue number is issued at the time of introduction of the inorganic waste to the final disposal site by the raw material specifying means. However, the present invention is not limited thereto. For example, issuance of the issue number may be omitted, and management may be performed using a waste information acquired from the consigner, or an identification number or an identification code specified by the consigner for each waste.

### Description of Reference Numerals

10: Management system (compressed solidification manufacturing management system)
11: Raw material specifying means
12: Memory managing means
20: Manufacturing system (compressed solidification manufacturing management system)
21: Banking material manufacturing means
22: Compressing-solidifying means,
101: First space
102: Second space
110: First compressed solidification part (compressed solidification)
120: Second compressed solidification part (compressed solidification)
130: Third compressed solidification part (compressed solidification)

## Claims

1. A method for manufacturing and managing a compressed solidification (110, 120, 130) by means of a compressed solidification manufacturing management system (10) which manufactures and manages a compressed solidification (110, 120, 130) obtained by filling in banking material containing inorganic waste at a final disposal site, **characterized by** comprising:
a raw material specifying means (11) which specifies a type, weight and consigner of the inorganic waste introduced into the final disposal site;
a banking material manufacturing means (21) which manufactures, according to the type of the inorganic waste specified by the raw material specifying means (11), a type-A banking material prepared by mixing a cement and water with a type-A inorganic waste in which a hazardous material concentration is equal to or less than a predetermined reference value, or a type-B banking material prepared by mixing the cement and water with a type-B inorganic waste in which the hazardous material concentration exceeds the predetermined reference value;
a compressing-solidifying means (22) which forms the compressed solidification (110, 120, 130), after demarcating by walls an actual fill demarcated space corresponding to a coordinate space preliminarily partitioned three-dimensionally with respect to fill space of the final disposal site, and providing a first space (101) and a second space (102) by partitioning the fill demarcated space in a horizontal direction, by forming a first compressed solidification part (110) by pouring and compressing the type-B banking material in the first space (101), by forming a second compressed solidification part (120) by pouring and compressing the type-A banking material on top of the first compressed solidification part (110), and by forming a third compressed solidification part (130) by removing the partition between the first space (101) and the second space (102) in a state where the first compressed solidification part (110) and the second compressed solidification part (120) are formed, and pouring and compressing the type-A banking material in the second space (102); and
a memory managing means (12) which memorizes and manages, as information of the type-A banking material and the type-B banking material compressed and solidified in the fill demarcated space by the compressing-solidifying means (22), the type, the weight and the consigner of the inorganic waste specified by the raw material specifying means (11), a manufacturing date and a weight of the type-A banking material or the type-B banking material manufactured by the banking material manufacturing means (21), and a used date on which the type-A banking material or the type-B banking material is used by the compressing-solidifying means (22), that are coordinated to each coordinate space;
wherein the memory managing means (12) issues a treatment certification displaying the coordinate space to the consigner, after completion of the formation of the compressed solidification in the fill demarcated space by the compressing-solidifying means (22).

2. The method for manufacturing and managing a compressed solidification (110, 120,130) (10) according to Claim 1,
wherein the raw material specifying means (11) specifies the type, the weight, and the consigner of the inorganic waste introduced into the final disposal site, and issues an issue number accompanying the introduction, and
the memory managing means (12) memorizes and manages, as information of the type-A banking material and the type-B banking material compressed and solidified in the fill demarcation space by the compressing-solidifying means (12), the issue number issued by the raw material specifying means (11), that is coordinated to each coordinate space, and display the issue number together with the coordinate space in the treatment certification.

## Patentansprüche

1. Verfahren zum Herstellen und Managen einer verdichteten Verfestigung (110, 120, 130) mittels eines Managementsystems (10) zum Herstellen einer verdichteten Verfestigung, das eine verdichtete Verfestigung (110, 120, 130) herstellt und managt, die durch Einfüllen von Aufschichtungsmaterial, das anorganischen Abfall enthält, auf einer Deponie erhalten wird, **dadurch gekennzeichnet, dass** es umfasst:
ein Rohmaterialangabemittel (11), das eine Art, ein Gewicht und einen Absender des anorganischen Abfalls, der in die Deponie eingebracht wird, angibt;
ein Aufschichtungsmaterialherstellungsmittel (21), das gemäß der Art des anorganischen Abfalls, die durch das Rohmaterialangabemittel (11) angegeben wird, ein Aufschichtungsmaterial vom Typ A, hergestellt durch Mischen eines Zements und von Wasser mit einem anorganischen Abfall vom Typ A, in dem eine Gefahrstoffkonzentration gleich einem oder geringer als ein vorgegebenem/r Referenzwert ist, oder ein Aufschichtungsmaterial vom Typ B, hergestellt durch Mischen des Zements und von Wasser mit einem anorganischen Abfall vom Typ B, in dem die Gefahrstoffkonzentration den vorgegebenen Referenzwert übersteigt, herstellt;
ein Verdichtungs-Verfestigungsmittel (22), das - nach einem Abgrenzen eines tatsächlichen abgegrenzten Füllraums, der einem Koordinatenraum entspricht, der vorab bezogen auf Füllraum der Deponie dreidimensional geteilt wurde, durch Wände und einem Bereitstellen eines ersten Raums (101) und eines zweiten Raums (102) durch Teilen des abgegrenzten Füllraums in einer horizontalen Richtung - die verdichtete Verfestigung (110, 120, 130) ausbildet, und zwar durch Ausbilden eines ersten Teils (110) der verdichteten Verfestigung durch Gießen und Verdichten des Aufschichtungsmaterials vom Typ B in den/m ersten Raum (101), durch Ausbilden eines zweiten Teils (120) der verdichteten Verfestigung durch Gießen und Verdichten des Aufschichtungsmaterials vom Typ A auf den/m ersten Teil (110) der verdichteten Verfestigung und durch Ausbilden eines dritten Teils (130) der verdichteten Verfestigung durch Entfernen der Abgrenzung zwischen dem ersten Raum (101) und dem zweiten Raum (102) in einem Zustand, in dem der erste Teil (110) der verdichteten Verfestigung und der zweite Teil (120) der verdichteten Verfestigung ausgebildet sind, sowie Gießen und Verdichten des Aufschichtungsmaterials vom Typ A in den/m zweiten Raum (102); und
ein Speichermanagementmittel (12), das - als Information über das Aufschichtungsmaterial vom Typ A und das Aufschichtungsmaterial vom Typ B, die durch das Verdichtungs-/Verfestigungsmittel (22) in dem abgegrenzten Füllraum verdichtet und verfestigt wurden - die Art, das Gewicht und den Absender des anorganischen Abfalls, die durch das Rohmaterialangabemittel (11) angegeben werden, ein Herstellungsdatum und ein Gewicht des Aufschichtungsmaterials vom Typ A oder des Aufschichtungsmaterials vom Typ B, das durch das Aufschichtungsmaterialherstellungsmittel (21) hergestellt wurde, und ein Benutzungsdatum, an dem das Aufschichtungsmaterial vom Typ A oder das Aufschichtungsmaterial vom Typ B durch das Verdichtungs-/Verfestigungsmittel (22) benutzt wird, die jedem Koordinatenraum zugeordnet sind, speichert und managt;
wobei das Speichermanagementmittel (12) nach dem Abschluss der Ausbildung der verdichteten Verfestigung in dem abgegrenzten Füllraum durch das Verdichtungs-Verfestigungsmittel (22) dem Absender eine Behandlungsbescheinigung ausstellt, die den Koordinatenraum anzeigt.

2. Verfahren zum Herstellen und Managen einer verdichteten Verfestigung (110, 120, 130) (10) nach Anspruch 1,
wobei das Rohmaterialangabemittel (11) die Art, das Gewicht und den Absender des anorganischen Abfalls, der in die Deponie eingebracht wird, angibt und eine Ausstellungsnummer, welche die Einbringung begleitet, ausgibt und
das Speichermanagementmittel (12) - als Information des Aufschichtungsmaterials vom Typ A und des Aufschichtungsmaterials vom Typ B, die durch das Verdichtungs-Verfestigungsmittel (22) in dem Abgrenzungsfüllraum verdichtet und verfestigt wurden - die Ausstellungsnummer, die durch das Rohmaterialangabemittel (11) ausgegeben wird und die jedem Koordinatenraum zugeordnet ist, speichert und managt und die Ausstellungsnummer zusammen mit dem Koordinatenraum in der Behandlungsbescheinigung anzeigt.

## Revendications

1. Procédé de fabrication et de gestion de produits de solidification compactés (110, 120, 130) au moyen d'un système de gestion de la fabrication de produits de solidification compactés (10) qui fabrique et gère des produits de solidification compactés (110, 120, 130) obtenus en déversant des matériaux de remblai renfermant des déchets inorganiques sur un site de décharge finale,
**caractérisé en ce qu'**
il comprend :
des moyens de signalisation des matériaux bruts (11) qui précisent le type, le poids et la provenance des déchets inorganiques introduits dans le site de décharge finale,
des moyens de fabrication de matériaux de remblai (21) qui fabriquent selon le type de déchets inorganiques précisé par les moyens de signalisation des matériaux bruts (11) des matériaux de remblai de type A préparés en mélangeant du ciment et de l'eau avec des déchets inorganiques de type A, dans lesquels la concentration de matériaux dangereux est égale ou inférieure à une valeur de référence prédéfinie, ou des matériaux de remblai de type B préparés en mélangeant du ciment et de l'eau avec des déchets inorganiques de type B dans lesquels la concentration en matériaux dangereux dépasse la valeur de seuil prédéfinie,
des moyens de solidification-compactage (22) qui forment les produits de solidification compactés (110, 120, 130) après avoir délimité par des parois un espace délimité de déversement réel correspondant à un espace de coordonnées préalablement subdivisées selon trois dimensions par rapport à l'espace de déversement du site de décharge finale, et mis à disposition un premier espace (101) et un second espace (102) en subdivisant l'espace de déversement délimité en direction horizontale, en formant une première partie de produits de solidification compactés (110) en déversant et compactant les matériaux de remblai de type B dans le premier espace (101), en formant une seconde partie de produits de solidification compactés (120) en déversant et compactant les matériaux de remblai de type A au-dessus de la première partie de produits de solidification compactés (110), et en formant une troisième partie de produits de solidification compactés (130) en enlevant la séparation entre le premier espace (101) et le second espace (102) dans un état où la première partie de produits de solidification compactés (110) et la seconde partie de produits de solidification compactés (120) sont formés, et en déversant et compactant les matériaux de remblai de type A dans le second espace (102), et
des moyens de gestion de mémoire (12) qui mémorisent et gèrent en tant qu'informations des matériaux de remblai de type A et des matériaux de remblai de type B compactés et solidifiés dans l'espace de déversement démarqué par les moyens de solidification-compactage (22), le type, le poids et la provenance des déchets inorganiques précisés par les moyens de signalisation des matériaux bruts (11), la date de fabrication et le poids des matériaux de remblai de type A ou des matériaux de remblai de type B fabriqués par les moyens de fabrication des matériaux de remblai (21), et la date d'utilisation à laquelle les matériaux de remblai de type A ou les matériaux de remblai de type B sont utilisés par les moyens de solidification-compactage (22) qui sont associés à chaque espace de coordonnées,
les moyens de gestion de mémoire (12) effectuant une certification de traitement affichant l'espace de coordonnées à l'expéditeur après achèvement de la formation des produits de solidification compactés dans l'espace de déversement délimité par les moyens de solidification-compactage (22).

2. Procédé de fabrication et de gestion de produits de solidification compactés (110, 120, 130) conforme à la revendication 1,
selon lequel les moyens de signalisation du matériau brut (11) précisent le type, le poids et la provenance des déchets inorganiques introduits dans le site de décharge finale et fournissent un numéro de sortie accompagnant cette introduction, et
les moyens de gestion de mémoire (12) mémorisent et gèrent en tant qu'informations des matériaux de remblai de type (A) et des matériaux de remblai de type (B) compactés et solidifiés dans l'espace de délimitation rempli par les moyens de solidification-compactage (12), le numéro de sortie délivré par les moyens de signalisation des matériaux bruts (11) qui est associé à chaque espace de coordonnées et affichent le numéro de sortie avec l'espace de coordonnées associé dans le certificat de traitement.
